# EUROPÄISCHE PATENTSCHRIFT

(11) **EP 2 252 554 B1**
(45) Veröffentlichungstag und Bekanntmachung des Hinweises auf die Patenterteilung: **22.05.2013**
(21) Anmeldenummer: 09715839.8
(22) Anmeldetag: 24.02.2009
(51) Int. Cl.: C03B 5/18, B01F 13/00

(54) **VERFAHREN UND VORRICHTUNG ZUR ERZEUGUNG VON STRÖMUNGEN, DRUCKSCHWANKUNGEN UND MECHANISCHEN SCHWINGUNGEN INNERHALB VON ELEKTRISCH LEITFÄHIGEN FLUIDEN MIT HILFE DER LORENTZKRAFT**
METHOD AND DEVICE FOR PRODUCING STREAMS, PRESSURE VARIATIONS AND MECHANICAL VIBRATIONS IN ELECTRICALLY CONDUCTIVE FLUIDS BY MEANS OF LORENTZ FORCE
PROCÉDÉ ET DISPOSITIF DE PRODUCTION DE VARIATIONS D'ÉCOULEMENTS ET DE PRESSION, ET DE VIBRATIONS MÉCANIQUES DANS DES FLUIDES ÉLECTROCONDUCTEURS AU MOYEN DE LA FORCE DE LORENTZ

(30) Priorität: 25.02.2008 DE 102008011008
(43) Veröffentlichungstag der Anmeldung: 24.11.2010
(73) Patentinhaber: Hofmann, Otto R., 99425 Weimar (DE)
(72) Erfinder: Hofmann, Otto R., 99425 Weimar (DE)
(74) Vertreter: Donath, Dirk
(86) Internationale Anmeldenummer: PCT/DE2009/000261
(87) Internationale Veröffentlichungsnummer: WO 2009/106058

(56) Entgegenhaltungen:
- DE-A1- 2 056 445
- DE-A1-102005 058 729
- GB-A- 1 289 317
- GB-A- 2 200 979
- US-A1- 2005 252 243
- DATABASE WPI Week 198414 Thomson Scientific, London, GB; AN 1984-087160 XP002543252 & SU 1 024 423 A (OSMANIS A D) 23. Juni 1983 (1983-06-23) & SU 1 024 423 A1 (OSMANIS ANTON D [SU]; MIKELSON ARTUR E [SU]; POCHS LIBERIJ YA [SU]; BA) 23. Juni 1983 (1983-06-23)

## Beschreibung

Die Erfindung betrifft ein Verfahren und eine Vorrichtung zur Erzeugung von Strömungen, Druckschwankungen und mechanischen Schwingungen innerhalb von elektrisch leitfähigen Fluiden mit Hilfe der Lorentzkraft in einem Arbeitsprozess, insbesondere zur Mischung, Homogenisierung, Läuterung und Beschleunigung chemischer Reaktionen und physikalischer Prozesse in Glasschmelzen mit Hilfe eines elektrischen Wechselfeldes und eines magnetischen Wechselfeldes. Die Beeinflussung soll werkzeug- und berührungslos erfolgen.

Die Anwendung magnetischer Felder und daraus generierter Lorentzkräfte in der Metallurgie und Halbleiterindustrie, zur Beeinflussung der Strömung von elektrisch gut leitenden Schmelzen ist bekannt. Ein stationäres magnetisches Feld erzeugt im bewegten Fluid z.B. die Abbremsung der Geschwindigkeit v und dämpft oder beseitigt Wirbel und zeitliche Instabilitäten. Andererseits kann man mit einem zeitlich veränderlichen, bspw. periodischen magnetischen Feld der Frequenz v, das man extern an eine relativ langsame Schmelze anlegt, deren Bewegung und damit Durchmischung erhöhen. Dieser Effekt resultiert (bei der hohen elektrischen Leitfähigkeit der Metalle) aus der induzierten Stromdichte und der erzeugten Lorentzfeldstärke v x B. Stromdichte und Magnetfeld haben dabei naturgemäß die gleiche Frequenz. Die insgesamt in der Schmelze entstehende Stromdichteverteilung erzeugt mit dem externen und dem eigenen Magnetfeld eine Lorentzkraftverteilung, welche die Metallschmelzeströmung beeinflusst. Hierzu wird auf die Publikation von P. A. Davidson: Magnetohydrodynamics in Materials, Annual Rev. Fluid Mechanics 1999,31: 273-300 verwiesen.
Der Stand der Technik zur Mischung und Homogenisierung von viskosen Fluiden, insbesondere Glasschmelzen und ähnlichen, elektrisch wenig leitfähigen Reaktionsgemischen ist durch eine Vielzahl der unterschiedlichsten Lösungen charakterisiert, siehe DE 10 2005 058 729 A1. Die im Allgemeinen hochviskosen Glasschmelzen sind schwer zu mischen und neigen zu einem strähnigen Strömungscharakter. Die Anforderungen an die Glasqualität verlangen aber eine gute Durchmischung und gute thermische und stoffliche Homogenität.
Das wird hauptsächlich durch die wegen der Temperaturdifferenzen innerhalb des Fluids auftretende freie Konvektion und die damit erzeugten Geschwindigkeitsgradienten bzw. Scherspannungen bewirkt. Weitere Möglichkeiten zur Verstärkung oder Umlenkung der Strömung und somit zur Verbesserung der Homogenität ergeben sich z.B.
- durch die starke Konvektion in Elektrodennähe bei direkter Elektroheizung,
- durch das Eindüsen von Gas (Bubbling),
- durch den Einsatz von mechanischen Rührern und
- durch die Anwendung der Lorentzkraft.

Die Anwendung der Lorentzkraft auf elektrisch nur mäßig leitfähige Materialien (Glasschmelzen) ist schwieriger als bei gut leitenden Metallschmelzen. Prinzipiell unterschiedliche Möglichkeiten, Lorentzkräfte in elektrisch relativ schlecht leitenden Fluiden zu generieren, sind die Ausnutzung des Magnetfeldes im Gebiet einer Stromzuführungselektrode und der dort übertretenden hohen Stromdichte (Lorentzkraft im Eigenfeld des Elektrodenstromes), siehe hierzu: Hofmann, O. R.: The electromagnetic force in electric glass melting, Glass Sci. Technol. 76 (2003) No.7/8, sowie die Anwendung eines externen starken Magnetfeldes kombiniert mit der internen Stromdichteverteilung im Fluid, z.B. bei direkt elektrisch beheizten Schmelzen (Lorentzkraft im Fremdfeld).
Bei der erstgenannten Variante ist prinzipiell die Frequenz des Elektrodenstrommagnetfeldes gleich der Frequenz des meist radial die Elektrode verlassenden Stromes.
Bezüglich der zweiten Variante, also ein externes Magnetfeld anzuwenden, wurde bisher regelmäßig ebenfalls für das Magnetfeld (den das Magnetfeld erzeugenden Strom) die gleiche Frequenz wie für die Stromdichteverteilung im Fluid verwendet.
Für elektrisch schlecht leitende Materialien ist die Anwendung der Lorentzkraft über Induktion problematisch. Die Effekte sind z. B. für Gläser oder Oxidschmelzen wesentlich geringer oder von anderer Natur, da zwar elektrische Feldstärken induziert werden können, aber wegen der geringen Leitfähigkeit nur geringe Stromdichtewerte entstehen.
Erst bei größeren Werten für die magnetische Flussdichte B ergeben sich messbare Effekte. Die Veröffentlichung von Miyazawa, Y.: Effect of magnetic field on melt flow and crystal growth of oxide crystals. Prog. Crystal Growth and Charact. 38 (1999) 261-272 liefert ein Beispiel für die Anwendung eines Helmholzspulenpaares auf eine vertikale rohrförmige Oxidschmelze. Die Spulen sind entweder konzentrisch in Rohrrichtung versetzt angeordnet oder transversal. Sie erzeugen also entweder ein vertikales Magnetfeldfeld oder ein waagerechtes Magnetfeld in der Schmelze. Eine äußere Stromeinprägung über Elektroden ist nicht vorhanden, so dass es sich nicht um eine Lorentzkraftanwendung im Fremdfeld handelt. Für diese und ähnliche Messungen und Apparaturen zur Variation des Czochralski-Verfahrens ist stets die Frequenz der internen Stromdichte gleich der Frequenz des magnetischen Feldes. In den genannten Erfindungsbeschreibungen zur Anwendung der Lorentzkraft in Metall- und Halbleiterschmelzen erzeugt ein hochfrequentes magnetisches Wechselfeld in einer Schmelze Wirbelströme, die in Verbindung mit dem Magnetfeld eine Lorentzkraftdichteverteilung erzeugen und zu einer turbulenten Verwirbelung führen sollen.
Die elektrische Leitfähigkeit und der hohe apparative Aufwand schränken die Verwertbarkeit dieser Lösung entscheidend ein. Für elektrisch schlecht leitende Materialien (z. B. für Gläser oder Oxidschmelzen) erfolgt die Anwendung der Lorentzkraft deshalb günstiger durch Einsatz eines externen starken Magnetfeldes (Lorentzkraft im Fremdfeld). Hierzu sind für ein eng begrenztes Strömungsgebiet (z.B. Rohr, Kanal oder Tiegel) bereits einige Anwendungen bekannt, siehe bspw. die JP 01324304 A. Ein äußeres ferromagnetisches Magnetjoch mit Wicklungen umschließt einen Ofenraum zum Einschmelzen und Verglasen radioaktiver Abfälle und prägt über zwei Pole ein magnetisches Feld ein. Hierbei ist die erfolgreiche Untermischung von Material in eine Grundmasse besonders wichtig. Der elektrische Strom gleicher Frequenz wird über zwei Plattenelektroden der Glasschmelze zugeführt. Im Zentrum des Plattenpaares entsteht so eine Aufwärtsströmung und in der Umgebung naturgemäß Abwärtsströmung. Nachteilig für die volle Entfaltung der Kraftwirkung ist der große Abstand zwischen den Magnetfeldpolen und dem elektrischen Stromflussgebiet im Glas.

Die US 1,853,843 A beschreibt, wie auf einen sich im Rohrausfluss (mit und ohne Plunger) bewegenden Glasstrang mit Hilfe von außen konzentrisch angebrachten Magnetspulen Einfluss genommen werden kann. Die Vielzahl von Spulen wird programmgesteuert aktiviert und soll somit einen periodischen Glasfluss bewirken oder unterstützen. Die Magnetspulen sollen im Glas eine Spannung induzieren, und der dann fließende Induktionsstrom soll zur mechanischen Kraftwirkung führen. Die erwünschte berührungsfreien Einflussnahme dürfte zwar bei Metallen, jedoch nicht bei Glasschmelzen wirksam sein, bei denen die elektrische Leitfähigkeit um Zehnerpotenzen geringer und damit der induzierte Strom praktisch Null ist.
Eine technisch praktikable Lorentzkraftanwendung zeigt die US 6,849,121 B1. Bei der Halbleitermaterialherstellung wird eine Schmelze elektromagnetisch gerührt, indem man in einem metallischen Zylindergefäß eine Zentralelektrode platziert und die Magnetfeldspule außen um den Zylindermantel führt. Das Magnetfeld zeigt im Schmelzmaterial in Richtung der Achse, die Stromdichte fließt radial und die generierte Lorentzkraft verläuft peripher, so dass eine Rotation einsetzt und die Schmelze mischt. Die Frequenz des Magnetfeldes ist gleich der Frequenz der elektrischen Stromdichteverteilung.
Auch in der DE 10 2005 058 729 A1 sind mehrere Helmholtzspulen konzentrisch um einen auslaufenden Glasstrang angeordnet. Zusammen mit der radialen Stromdichte um eine Zentralelektrode entsteht eine tangentiale Kraftwirkung bzw. Rotationsströmung. Die Frequenz des Magnetfeldes ist gleich der Frequenz der elektrischen Stromdichteverteilung.
Bei den letztgenannten beiden Erfindungen ist nachteilig, dass diese Strömung rotationssymmetrisch, strähnig, langsam und hochviskos ist und deshalb wenig mischend bzw. homogenisierend wirkt. Das zeitliche langwellige Wechseln der Strömungsrichtung oder die Entgegenschaltung von Links- und Rechtsdrehung beseitigt diesen Nachteil nicht. Weiterhin ist die drehende Lorentzkraft mindestens eine Größenordnung kleiner als die beim Ausfließen auftretende Gewichtskraft.

In der GB 1081729A wird ein verbessertes Verfahren zur Herstellung von Glasperlen beschrieben, bei dem ein elektrisch kontaktierter, aus einem Gefäß auslaufender dünner Glasstrang durch ein elektromagnetisches Feld fällt.
Aus dem Zusammenwirken des magnetischen Feldes und des elektrischen Stromes im Glasstrang entsteht eine Lorentzkraft, die den Glasstrang in seiner Gesamtheit periodisch bewegt, pendeln lässt und in eine Vielzahl von Glasperlen auflöst.

In der GB 1289317 werden Anordnungen von Stromzuführungselektroden und Magnetpolen beschrieben. Am Schmelzbehälter sind außerhalb in großem Abstand voneinander ungleichnamige Magnetpole angeordnet, damit ein möglichst großes Volumen der Glasschmelze mit einer Lorentzkraftwirkung durchsetzt werden kann. Wegen des großen Magnetpolabstandes und ihres divergierenden Verlaufs ist allerdings die magnetische Flussdichte sehr gering und die Lorentzkraftdichte unerwünscht klein.
Darüber hinaus müssen die Frequenzen von Strom und Magnetfeld gleich sein, weil der durch die Elektromagnete fließende Strom auch als Heizstrom durch die Elektroden und das Fluid fließt und weil die offenbarten Schaltungsmittel nur diese Frequenzgleichheit zulassen.

In der SU 814904 A werden Läuterung und Homogenisierung einer Glasschmelze bei unterschiedlichen Viskositäten (in Abhängigkeit von den zugehörigen Temperaturen) sowie mit und zu unterschiedlichen Zeiten vorgenommen. Die Richtung des Induktionsvektors eines äußeren magnetischen Wechselfeldes ist zwischen zwei zueinander rechtwinkligen Richtungen veränderbar. Ebenso wird die Richtung des Stromes nacheinander in drei zueinander rechtwinkligen Richtungen verändert, und zwar so, dass die eine Richtung des Magnetwechselfeldes gleichzeitig mit der zu ihr rechtwinkligen Stromrichtung eingeschaltet wird und die zweite Richtung des Magnetwechselfeldes der Reihe nach mit den Strömen der beiden anderen Richtungen eingeschaltet wird, die zu dieser Richtung des Magnetfeldes senkrecht verlaufen. Der so festgelegte Zyklus wiederholt sich alle 2 - 5 min.

Die SU 1024423 A betrifft ein Verfahren zur Verbesserung der Qualität von schwer herstellbaren optischen Gläsern, die diskontinuierlich in Tiegeln geschmolzen werden und unter Anwendung der Lorentzkraft bezüglich Homogenität und Läuterzustand verbessert werden sollen. Zur Erzeugung einer Strömung werden ein elektrisches Feld mit einer konstanten Frequenz νⱼ=50 Hz und ein magnetisches Feld mit einer Frequenz ν_{B}=50 Hz verwendet. Dadurch wird lediglich eine strähnige, laminare und stets im gleichen Drehsinn laufende Strömungswalze des Glases im Tiegel erzeugt. Eine periodisch quirlende Rührbewegung wird nicht erzeugt, so dass der angestrebte Homogenisierungserfolg keinesfalls ausreichend eintreten kann.
In der SU 1024423 A ist zur Erzeugung von Ultraschallschwingungen in zeitlich engen Grenzen eine konstante Magnetfeldfrequenz im Bereich zwischen ν_{B}=19 kHz und ν_{B}=250 kHz vorgesehen, die im Verbund mit der Stromdichte der Frequenz νⱼ=50 Hz wirkt. Damit ist nur mit einer Frequenz zu Druckschwankungen und zur Materialbeeinflussung führen kann. Die gleichzeitige Generierung einer zweiten Lorentzkraft mit einer Frequenz, die zu Bewegung führen könnte, ist nicht möglich. Dies kann nur durch die Verwendung einer aufwändigen, separaten, zweiten Magnetfeldfrequenz erreicht werden.

Die SU 1284950 A1 beinhaltet ein Verfahren zum Schmelzen von schwer schmelzbaren optischen Spezialgläsern in einem Tiegel. Abgesehen davon, dass ein genaues Regime des Eintrags der zu schmelzenden Bestandteile und der Temperaturführung zu befolgen ist, wird die Lorentzkraft im Material des Tiegels und nicht in der Glasschmelze erzeugt.

Ein Verfahren zur Steuerung der Dicke und Oberflächengeometrie eines Floatglasbandes, das auf einem Zinnbad schwimmt, ist in der US 3496736 A offenbart. Durch die Anwendung von Wechselstrom in einer Magnetspule entsteht im flüssigen, elektrisch gut leitendem Zinnbad im Gegensatz zu einem magnetischen Gleichfeld eines Permanent- oder Gleichstrommagneten ein magnetisches Wechselfeld, das in Verbindung mit einem Wechselstrom im Zinn eine Lorentzkraft im Zinnbad erzeugt.

Die Schrift US-A-2005/0252243 offenbart ein Verfahren zur Erzeugung von Strömungen, Druckschwankungen und mechanischen Schwingungen innerhalb von elektrisch leitfähigen Glasschmelzen mit Hilfe eines elektrischen Wechselfeldes und eines magnetischen Wechselfeldes.
Weiterhin ist aus US-A-2005/0252243 ein Behälter der mit Elektroden, die im Kontakt mit der Schmelze sind, und mit Magneten versehen ist.

SU-A-1024423 offenbart eine Vorrichtung zur Mischung von Glasschmelzen, wobei sich die Glasschmelze in einem Behälter in Kontakt mit Elektroden befindet. Außerhalb des Behälters ist ein Magnet mit gegenüber liegenden Polen vorgesehen, die sich in Vertiefungen des Behälters befinden. Der Behälter gemäß SU-A-1024423 ist ein Kanal oder ein Tiegel, wobei die Elektroden des Behälters durch das Behältermaterial in die Schmelze eintauchen.

Beim gesamten, vorstehend aufgezeigten Stand der Technik geht es immer um die Beeinflussung der Homogenisierung eines Fluids mit Hilfe der Lorentzkraft. Die bekannten konstruktiven Ausführungen bestehen aus einem oder wenigen Magnetpolpaaren, die kombiniert sind mit senkrechten oder waagerechten Stab- oder Plattenelektroden. Damit wird die viskose Strömung so beeinflusst, dass entweder eine waagerechte oder eine senkrechte Strömungswalze entsteht. Diese überlagert sich zwar der Hauptströmung, kann aber die viskose strähnige Hauptströmung nicht wesentlich ändern.

Aufgabe der vorliegenden Erfindung ist es daher, im Fall eines eng begrenzten Strömungsgebietes (bspw. Rohr, Kanal oder Tiegel) eine Lorentzkraftwirkung senkrecht zur Rohr-, Kanal oder Tiegelwand zu erzeugen, um im Fluid Gebiete zu schaffen, in denen auf Grund einer zeitlich variierenden Strömung und Kraftwirkung die Läuterung, Mischung und Homogenisierung effektiv beeinflusst wird. Weiterhin soll in Fall eines großen, ausgedehnten Strömungsgebietes (bspw. Schmelzwanne, Arbeitswanne, spezielle Läuter- und Homogenisierungsteile, Rinnen, Kanäle, Durchlassöffnungen, Riser, Feeder usw.) eine Lorentzkraftwirkung in einem räumlich abgegrenzten Gebiet geschaffen werden, in dem durch zeitlich variierende Strömung und Kraftwirkung die Mischung, Homogenisierung und Läuterung im Fluid effektiv beeinflusst werden kann. Schließlich soll im Fall eines großen, ausgedehten Strömungsgebietes ( z.B. Schmelzwanne, Arbeitswanne, spezielle Läuter- und Homogenisierungsteile, Rinnen, Kanäle, Durchlassöffnungen, Riser, Feeder u.s.w. ) eine Lorentzkraftwirkung so geschaffen werden, dass großräumige Strömungsführung und Umlenkung ebenso auftreten wie engräumige Verwirbelungsgebiete, in denen bei zeitlich variierender Strömung und Kraftwirkung die Mischung, Homogenisierung und Läuterung im Fluid effektiv beeinflusst werden kann.

Erfindungsgemäß wird diese Aufgabe durch die Merkmale des ersten, und neunten Patentanspruchs gelöst und durch die Merkmale der Unteransprüche weiter ausgestaltet. Es werden also die Vorteile der Lorentzkraft, insbesondere ihre gute Steuerbarkeit, das berührungsfreie Wirkprinzip und die Kraftentfaltung direkt im Fluid ausgenutzt. Auf diese Weise werden Fluidströmungen erzeugt, beschleunigt, gebremst oder umgelenkt. Es ist jedoch notwendig, ein Mindestmaß an elektromagnetischer Kraft zu erzeugen. Um wirksam zu werden, sollte die Lorentzkraft F_{L} die Größenordnung der Auftriebskraft erreichen. Eine zeitlich unregelmäßige oder periodische Strömung im Fluid führt zur Verbesserung der Mischung und Homogenität des Fluids, insbesondere von Glasschmelzen und ähnlichen chemischen Reaktionsgemischen.
Das erfindungsgemäße Verfahrens geht zunächst davon aus, dass die Frequenz νⱼ der elektrischen Stromdichte j sich von der Frequenz ν_{B} der Magnetflussdichte B des Magnetfeldes wenig unterscheidet. Dadurch ergeben sich Zeitabschnitte, in denen die Elongation der Stromdichteschwingungen und der Magnetflussdichteschwingungen überwiegend gleichsinnig (z.B. positiv) sind und Zeitabschnitte, in denen die Elongationen der j- und B-Schwingungen überwiegend gegensinnig sind. Durch die vektorielle Multiplikation von j und B ergeben sich unterschiedliche Richtungen der aus j und B resultierenden Lorentzkraftdichte f_{L}, und es entstehen je nach dem Frequenzverhältnis νⱼ zu ν_{B} und dessen zeitlichen Verlauf zeitlich periodische oder nichtperiodische Druckschwankungen und Strömungen. Je nach der Differenz, der Summe und dem Verhältnis von νⱼ und ν_{B} entstehen unterschiedliche Zeitabläufe der wirksamen Lorentzkraft F_{L}. Es können sich instationäre, periodische oder nichtperiodische Druckschwankungen, Strömungen und Strömungsänderungen ergeben, die sich periodisch oder nichtperiodisch einander abwechseln.
Das erfindungsgemäße Verfahren kann insbesondere zur Homogenisierung vorteilhaft so ausgeführt werden, dass die Frequenz νⱼ der elektrischen Stromdichte j sich von der Frequenz ν_{B} der Magnetflussdichte B nur geringfügig unterscheidet und sich dadurch die Druck- und Strömungsänderung langwellig, d.h. in großen zeitlichen Abständen vollzieht. Ist die Richtungsänderung der Lorentzkraft z.B. so langsam, dass die Fluidströmung (gekennzeichnet durch Dichte, Zähigkeit und Geschwindigkeit) hierauf reagieren kann, so wird damit vorzugsweise die Strömung des Fluids beeinflusst.
Das erfindungsgemäße Verfahren kann aber auch insbesondere zur Läuterung vorteilhaft so gestaltet werden, dass die Frequenz νⱼ der elektrischen Stromdichte fⱼ sich von der Frequenz ν_{B} des Magnetflussdichte f_{B} deutlich unterscheidet. In diesem Fall kann die Fluidströmung wegen ihrer Dichte und Viskosität nicht oder kaum reagieren, weil die Druck- und Strömungsänderung kurzwellig, d.h. in kleinen zeitlichen Abständen stattfindet. Es treten aber Drucksituationen bzw. Schwingungszustände im Fluid auf, die z.B. zur Wechselwirkung zwischen den Fluidbestandteilen führen und zur Homogenisierung des Fluids im molekularen Bereich ebenso beitragen können wie zu seiner Entgasung. Die Frequenzen der Druckschwankungen können gleich der Eigenfrequenz von Fluidbestanteilen sein und somit physikalische und chemische Veränderungen (Reaktionen) bewirken oder beeinflussen. Im Falle der unterschiedlichen, aber zeitlich konstanten Frequenzen νⱼ und ν_{B} ergeben sich hauptsächlich periodische Bewegungen und Druckschwankungen im Fluid. Auf diese Weise können gezielt gewünschte periodische Bewegungen generiert und bekannte Prozesse und Reaktionen beeinflusst werden. Wenn die Frequenz νⱼ der elektrischen Stromdichte j von der Frequenz ν_{B} der Magnetflussdichte B sich zeitlich ändernd verschieden ist und sich dadurch hauptsächlich nichtperiodische Bewegungen und Druckschwankungen im Fluid aufbauen, hat dies den Vorteil, dass eine Vielzahl von (auch unbekannten) Prozessen und Reaktionen beeinflusst werden kann und das Fluid durch unregelmäßige Bewegungen optimal gemischt wird. Durch die in Betrag, Richtung und Frequenz mehr oder weniger variierenden Lorentzkraftdichte f_{L} werden im Fluid unregelmäßige Drucksituationen unterschiedlichster Frequenzen erzeugt, die chemische und physikalische Vorgänge auch bei komplexen Materialien mit verschiedenartigsten Bestandteilen beeinflussen können.
Das erfindungsgemäße Verfahren kann günstiger Weise so ausgeführt werden, dass der Quotient νⱼ/ν_{B} aus der Frequenz der Stromdichte j und der Frequenz der Magnetflussdichte B eine rationale Zahl ist und somit eine periodische Kraftwirkung entsteht, welche die Fluide periodisch bewegt und in ihnen periodische Drucksituationen erzeugt werden, wodurch stoffliche Reaktionen und Vorgänge hervorgerufen, beeinflusst und gestoppt werden können.
Gemäß einer anderen vorteilhaften Variante des erfindungsgemäßen Verfahrens kann der Quotient νⱼ/ν_{B} auch eine irrationale Zahl sein und somit eine Kraftwirkung entstehen, welche Fluide durch unregelmäßige Bewegung optimal mischen und in Fluiden unregelmäßige Drucksituationen unterschiedlichster Frequenzen erzeugen kann, welche stoffliche Reaktionen und Vorgänge auch in komplexen Materialien mit verschiedenartigsten Bestandteilen hervorrufen, beeinflussen und stoppen können.
Das erfindungsgemäße Verfahren kann dadurch charakterisiert sein, dass die das elektrische Stromdichtefeld bewirkende Spannung U und damit die Frequenz νⱼ der elektrischen Stromdichte j unabhängig von der das magnetische Feld erzeugenden Spannung bzw. Stromstärke I und Frequenz ν_{B}, bspw. durch geeignete Funktionsgeneratoren und Verstärker, generiert wird.
Das erfindungsgemäße Verfahren kann auch dadurch gekennzeichnet sein, dass die das elektrische Stromdichtefeld bewirkende Spannung U und damit die Frequenz νⱼ der elektrischen Stromdichte j bspw. bei dicht beieinander liegenden Frequenzen νⱼ und ν_{B} abhängig von der das magnetische Feld erzeugenden Spannung bzw. Stromstärke und Frequenz (oder umgekehrt) generiert wird.
Wenn sich die Frequenz νⱼ der elektrischen Stromdichte j nur geringfügig von der Frequenz ν_{B} der Magnetflussdichte B unterscheidet, treten Zeitabschnitte auf, in denen die Elongation der Stromdichte- und Magnetflussdichte-Schwingungen überwiegend gleichsinnig ist. Weiterhin treten Zeitabschnitte auf, in denen die Elongation der Stromdichte- und Magnetflussdichte-Schwingungen überwiegend gegensinnig ist.
Dadurch ergeben sich allgemein langwellige Schwingungen der Lorentzkraftdichte, welche sich periodisch oder nichtperiodisch einander abwechseln können und denen das Fluid trotz seiner Massenträgheit mit Bewegungen folgen kann. Es ergeben sich somit instationäre, periodische oder nichtperiodische Strömungen, Strömungsänderungen und/oder Druckänderungen des Fluids.

Man kann mehrere solcher Bereiche, in denen die Lorentzkraftdichte die Drucksituation und die Strömung des Fluids beeinflusst, zu Anordnungen zusammengeschalten. In diesen Gebieten werden die Mischung, Homogenisierung und Gasbildung, Gaslösung und Entgasung des Fluids sowie chemische Reaktionen, Aggregats- und Modifikationswandlungen beeinflusst sowie Strukturen gebildet oder aufgelöst.
Bei einem Frequenzverhältnis von bspw. νⱼ/ν_{B} = 20 (oder umgekehrt ν_{B}/νⱼ = 20) entstehen kurzwellige Druckschwankungen mit der Frequenz der Summe der v-Werte. Diese Schwankungen führen im Mittel eine langwellige Kraft- bzw. Druckschwankung mit der Frequenz der Differenz der v-Werte aus. Wird das Frequenzverhältnis v/v nun bspw. auf 1/1,05 verändert, so entsteht eine resultierende langwellige Lorentzkraftfrequenz, die bei z.B. 50 Hz Netzfrequenz nur noch 1/20, also 2,5 Hz beträgt. Auf diese Art kann man Lorentzkraftfrequenzen generieren, bei denen das Fluid oder Fluidbestandteile mit Bewegung reagieren können.
Das Verhältnis der beim erfindungsgemäßen Verfahren ständig bestehenden unterschiedlichen Frequenzen νⱼ und ν_{B} wird als gering bezeichnet (die Differenz zwischen den Frequenzen νⱼ und ν_{B} ist gering), wenn es sich zwischen ca. 1 ... 10 bewegt; darüber hinaus (die Frequenzen νⱼ und ν_{B} weichen deutlich voneinander ab) wird es als bedeutend angesehen, wobei von einer Grundfrequenz von 50 Hz ausgegangen wird. Eine sinnvolle Obergrenze für das Frequenzverhältnis v/v ist 360.
Durch zeitliche Variation der Frequenzen νⱼ und ν_{B} lässt sich also erreichen, dass im Fluid sowohl chemische Reaktionen und physikalischer Prozesse beschleunigt ablaufen können, wie auch Transportprozesse auftreten, welche bspw. die Phasentrennung, Entgasung, Mischung und/oder Homogenisierung fördern können. Bei der Anwendung des erfindungsgemäßen Verfahrens auf Glasschmelzen ergeben sich durch die Variierung der Frequenzen νⱼ und ν_{B} in der Schmelze in zeitlicher und lokaler Folge Bereiche, in denen instationäre Wirbel gebildet und mit der Hauptströmung transportiert werden. Damit kommt es in diesen Bereichen zur Fluidmischung, zum Konzentrationsausgleich durch Diffusion, Gasbildung, zur Blasenvergrößerung und zum beschleunigten Blasentransport. Dies ermöglicht eine besonders effektive Verbesserung der Homogenität und der Läuterung.

Eine zur Durchführung des erfindungsgemäßen Verfahrens geeignete Vorrichtung muss grundsätzlich so gestaltet sein, dass die Lorentzkraft sowohl in einem ausgedehnten freien Strömungsgebiet, das räumlich groß im Vergleich zur Reichweite der Kraft ist, wie auch in einem eng begrenzten Strömungsgebiet, das eine Vorzugsströmungsrichtung aufweisen kann, z.B. in einer rohrförmigen oder n-eckförmigen Strömungsgeometrie oder in einem kanalförmigen Strömungsgebiet, wirksam zur Anwendung gebracht werden kann. In jedem Fall sollen die elektrische Stromdichte j und die magnetische Flussdichte B möglichst rechtwinklig zueinander stehen, damit eine größtmögliche Lorentzkraftdichte f_{L} zu Stande kommt, die gemäß der sogen. Rechte-Hand-Regel rechtwinklig zur Stromdichte und zur Magnetflussdichte gerichtet ist.
Grundsätzlich besteht die Vorrichtung aus einem das Fluid enthaltenden Behälter (Wanne, Kanal), an dessen Wand Elektroden zur Beheizung so angebracht sind, dass sie das Fluid kontaktieren. Werden die Elektroden bestromt, so bildet sich zwischen ihnen eine elektrische Stromdichte j aus. Isoliert vom Fluid, aber nahe an das Fluid herangeführt, befindet sich mindestens ein Magnet, der im Fluid eine magnetische Flussdichte B erzeugt. Die Stromleiter oder Einzelmagnete können auch in äußere Vertiefungen oder Rillen in der Behälterwand eingelassen sein. Zwangsläufig entsteht im Fluid mindestens eine elektromagnetische Kraft F_{L} bzw. elektromagnetische Kraftdichte f_{L} (f_{L} = F_{L} pro Volumenelement), die das Fluid hinsichtlich seiner Strömung und seines Drucks beeinflusst. Zur Beeinflussung der Strömung und der internen Drucksituation sind die Elektroden und der mindestens eine Magnet mit einer Steuereinheit verbunden, welche die Elektroden und den Magneten so ansteuert, dass sich eine Stromdichte j ausbildet, deren Frequenz νⱼ von der Frequenz ν_{B} der magnetischen Stromdichte B verschieden ist und die getrennt oder gemeinsam variierbar sein können.

Auf diese Weise werden im Fluid bspw. zeitlich Strömungsrichtung und Strömungsgeschwindigkeit verändert, Wirbel und Druckverhältnisse geändert.

Ist z.B. die Richtung der elektrischen Stromdichte j vorgegeben und ordnet man die einzelnen Magnete so an, dass sie eine zueinander gleichsinnige
B-Verteilung erzeugen, so entstehen Strömungshindernisse für eine evtl. vorhandene Fluidströmung mit Stauungsgebieten sowie Gebiete mit zeitlichen Schwankungen des Druckes und großräumiger Umlenkung der Strömung sowie verlängerte Strömungsbahnen.
Ist die Richtung der elektrischen Stromdichte j vorgegeben und ordnet man die einzelnen Magnete so an, dass sie zueinander z.B. eine in abwechselnde Richtungen weisende Magnetflussdichte B erzeugen, so entsteht bevorzugt eine lokal wirbelähnliche Strömung mit verstärkter Scherung, Materialmischung und Homogenisierung des Fluids.

Soll die Lorentzkraft in einem eng begrenzten Strömungsgebiet mit Vorzugsströmungsrichtung, z.B. in einer rohrförmigen oder n-eckförmigen Strömungsgeometrie oder in einem kanalförmigen Strömungsgebiet wirksam zur Anwendung gebracht werden, so kann vorteilhaft die Anordnungen der Stromkontakte (Elektroden) bezüglich des Fluidstroms (Glasströmung im Rohr) aus zwei oder mehreren entlang der Rohr- bzw. Kanalrichtung liegenden Stromzuführungselektroden bestehen, die untereinander einen den elektrischen Widerstand bestimmenden Abstand haben. Sie sind bspw. periphere Ringelektroden, die den Stromfluss in Richtung des Rohres bzw. Kanals ermöglichen. Wenn nunmehr Stromleiter, die das Magnetfeld erzeugen, in Rohr- bzw. Kanalrichtung verlaufen, das Rohr bzw. den Kanal längs einhüllen bzw. umgeben und so im Material ein in Umfangrichtung zeigendes Magnetfeld erzeugen, so zeigt die generierte Lorentzkraft entweder radial nach innen oder radial nach außen. Im Fall einer zeitlich variierenden Kraft entstehen entsprechende Strömungs- bzw. Drucksituation, die zu schwingungs- bzw. wirbelähnlichen Zuständen im Fluid und dessen Berandungsmaterial führen.

Im Sonderfall wird durch diese Anordnung die Aufweitung oder Einschnürung der Fluidströmung bzw. des Fluidstrangs unterstützt.
Die Stromleiter können von einem Strom I alle in einer Richtung, also gleichsinnig, oder mit einem zwischen den Stromleitern vorgegebenen Wechsel der Stromrichtung durchflossen werden.

Eine weitere vorteilhafte Ausführungsform der Anordnung der Stromkontakte (Elektroden) bezüglich des Behälters der Fluidströmung besteht aus einzelnen Elektrodenblöcken, die entlang des Behälterumfangs (Rohrumfangs) angeordnet sind und zwischen denen treibende Spannungen anliegen. In dem Fall zeigt die Stromrichtung peripher, also in Umfangsrichtung oder in Durchmesserrichtung des Rohres. Wenn die das Magnetfeld erzeugenden Stromleiter das Rohr des Fluidstroms in Form einer Spulenwicklung umhüllen und so im Fluid ein magnetisches Feld in Richtung der Durchströmung (Längsrichtung) erzeugen, so zeigt die generierte Lorentzkraft wiederum radial nach innen oder radial nach außen.
Auch hier wird im Sonderfall durch diese Anordnung die Aufweitung oder Einschnürung der Fluidströmung bzw. des Fluidstrangs unterstützt.

Unabhängig davon, ob eng begrenzte oder weiträumige Strömungsgebiete angewendet werden, erzeugt die beschriebene langwellige Lorentzkraft meist Strömungen, während die kurzwellige Lorentzkraft meist Druckschwankungen generiert.

Die wellenförmigen Strukturen der Druckverteilung mit Knoten und Wellenbäuchen variieren entsprechend der Lorentzkraft zeitlich und örtlich. In diesen Knoten und Bäuchen der Lorentzkraftwirkung werden solche Prozesse wie Phasentrennung, Entgasung und chemische Reaktionen beeinflusst. Beispielsweise entstehen in den Bäuchen der Lorenzkraftwirkung durch Resonanz mit den Fluidbestandteilen Gasblasen, während sich die Gasblasen in den Knoten sammeln. Bewegen sich diese Knoten im Fluid, so können diese Gasblasen zur Fluidoberfläche transportiert und die Läuterung damit unterstützt werden.

Die Magnete zur Erzeugung der magnetischen Flussdichte B können mit C-, U- oder V-förmigen Joch gestaltet sein, an dessen Enden sich die Pole N (Nord) S (Süd) befinden und das die Magnetflussdichte verstärkend beeinflusst. Dabei können die Pole in Verengungen des Behälters hineinragen oder sich zu beiden Seiten von Erweiterungen oder Kanten des Behälters mit möglichst geringem Polabstand befinden.

Es ist möglich, mehrere solcher räumlichen Bereiche, in denen die Lorentzkraft die Drucksituation und die Strömung des Fluids beeinflusst, zu Anordnungen zusammenzuschalten, um z.B. die Mischung, Homogenisierung und Entgasung des Fluids sowie chemische Reaktionen, Aggregatzustands- und Modifikationswandlungen etc. großräumig zu beeinflussen sowie Strukturen zu bilden oder aufzulösen.

Weitere Merkmale und Zusammenhänge der Erfindung sind den nachfolgenden Erläuterungen und Darstellungen der schematischen Zeichnungen entnehmbar, in denen im Einzelnen zeigen:
- Fig. 1: eine Steuereinheit zur Ansteuerung der elektrischen und magnetischen Bauteile in Blochdarstellung,
- Fig. 2: einen Axialschnitt eines ersten Ausführungsbeispiels im Aufriss,
- Fig. 3: einen Querschnitt entlang der Linie G-G in Figur 2,
- Fig. 4: einen Querschnitt durch die Geometrie eines zweiten Ausführungs-beispiels,
- Fig. 5: einen Querschnitt durch die Geometrie eines dritten Ausführungs-beispiels,
- Fig. 6: einen Querschnitt durch die Geometrie eines vierten Ausführungs-beispiels,
- Fig. 7: einen Längsschnitt eines fünften Ausführungsbeispiels,
- Fig. 8: einen entstehenden Fluidstrom zum fünften Ausführungsbeispiel,
- Fig. 9: einen weiteren, aus dem fünften Ausführungsbeispiel entstehenden Fluidstrom,
- Fig. 10: einen Axialschnitt eines sechsten Ausführungsbeispiels,
- Fig. 11: einen Querschnitt entlang der Linie K-K in Figur 10,
- Fig. 12: einen Querschnitt durch ein siebentes Ausführungsbeispiel,
- Fig. 13: ein erstes Frequenzdiagramm der Stromdichte j und der Magnetflussdichte B in einer Zeitspanne von 0,2 s.,
- Fig. 14: den zeitlichen Verlauf der sich aus Fig. 13 ergebende Lorentzkraftdichte f_{L} in einer Zeitspanne von 0,2 s,
- Fig. 15: den zeitlichen Verlauf der Lorentzkraftdichte für das in Fig. 14 verwendete Frequenzpaar von j und B in einer Zeitspanne 2 s,
- Fig. 16: den zeitlichen Verlauf der Lorentzkraftdichte für ein zweites Frequenzpaar von j und B in einer Zeitspanne 2 s und
- Fig. 17: den zeitlichen Verlauf der Lorentzkraftdichte für ein drittes Frequenzpaar von j und B in einer Zeitspanne 20 s .

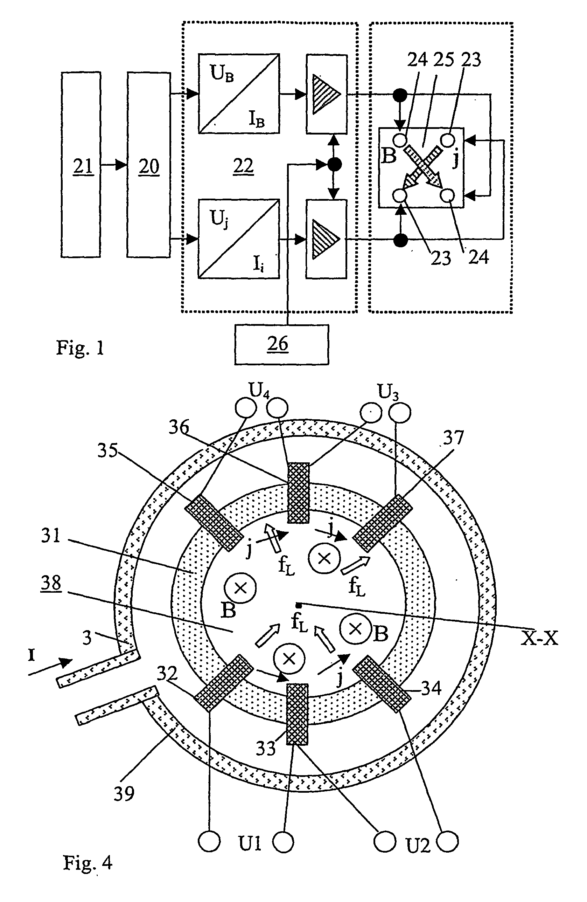

In Fig. 1 ist ein Frequenzgenerator 20 einerseits mit einer Eingabeeinheit 21 und andererseits mit einer Wandler-Verstärker-Einheit 22 verbunden, deren Signale den Elektroden 23 und Magneten 24 zugeführt werden, die an einem Fluidbehälter 25 anliegen. Ein Netzteil 26 stellt die erforderliche elektrische Leistung bereit.
Mit Hilfe der Eingabeeinheit 21 werden Werte für die Ströme bzw. Spannungen U₁, U₂, Frequenzen ν₁, ν₂ und Phasenwinkel ϕ₁, ϕ₂ in den Frequenzgenerator 20 eingegeben, der daraus entsprechende Spannungs- bzw. Strom-Zeit-Verläufe für die elektrische Stromdichte j und magnetische Flussdichte B ermittelt, diese über die Wandler-Verstärker-Einheit 22 generiert und an die Elektroden 23 und Magnete 24 weiter gibt und so deren Ströme I und Frequenzen ν im Prozess beeinflusst bzw. steuert.

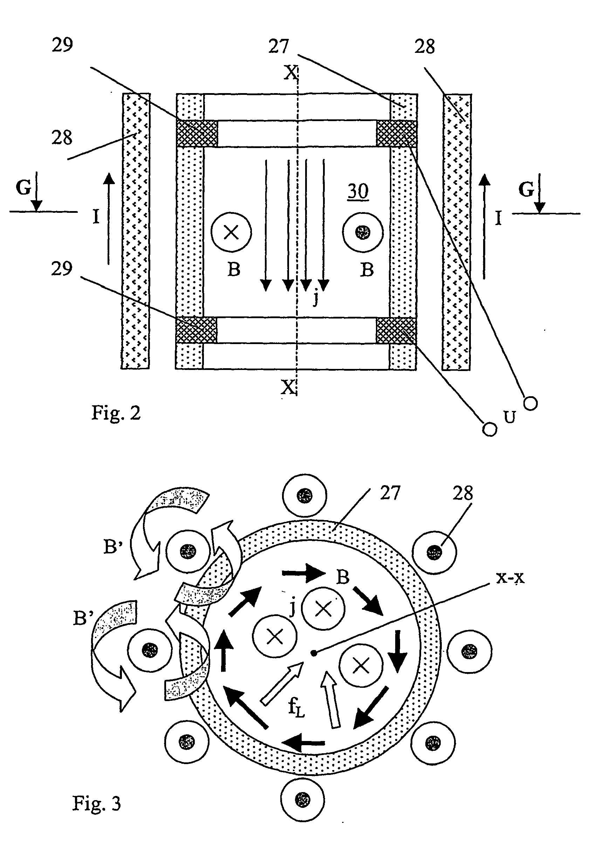

In den Fig. 2 und 3 ist ein Rohr 27 mit einer geometrischen Achse X-X von stabförmigen Stromleitern 28 (z.B. gekühlte Hochstromleitungen) umgeben und mit ringförmigen Elektroden 29 versehen, die zumindest angenähert koaxial zur Achse X-X angeordnet sind. Im Rohr 27 befindet sich ein Fluid oder Fluidstrom 30, wobei der Fluidstrom im Wesentlichen parallel zur Achse X-X gerichtet ist. Die Ringelektroden 29 sind in das Rohr 27 eingelassen und so gestaltet, dass sie noch ein Stück in das elektrisch leitfähige Fluid 30 hineinragen. Zwischen ihnen besteht eine elektrische Spannung U, die im Prozess eine elektrische Stromdichte j erzeugt. Jeder der stabförmigen Stromleiter 28 wird von einem Strom I durchflossen und erzeugt um sich herum eine magnetische Flussdichte B' (Fig. 3). Die Resultierende der Flussdichten B' im Rohr 27 ist die Flussdichte B parallel zur Zeichenebene der Fig. 3, deren Frequenz ν_{B} ist und die rechtwinklig zur Stromdichte j gerichtet ist. Die Frequenz νⱼ der Stromdichte j ist verschieden von der Frequenz ν_{B} der magnetischen Flussdichte B. In Fig. 2 ist die resultierende magnetische Flussdichte B links durch Kreis mit Kreuz und rechts durch Kreis mit Punkt bezeichnet. Damit ist gesagt, dass die resultierende Flussdichte B peripher gerichtet ist und auf der linken Seite der Fig. 2 in die Zeichenebene hineinzeigt und auf der rechten Seite der Fig. 2 aus der Zeichenebene herauszeigt. Analoges gilt auch für die nachfolgenden Figuren.
Die elektrische Stromdichte j zeigt in Fig. 3 senkrecht in die Zeichenebene hinein und ist durch ein Kreuz mit einem umschriebenen Kreis dargestellt. Stromdichte j und Flussdichte B erzeugen gemäß der Rechte-Hand-Regel eine Lorentzkraftdichte f_{L}, die senkrecht zu j und B und zur Achse X-X gerichtet und bestrebt ist, das Fluid 30 einzuengen. Für die Lorentzkraftdichte f_{L} gilt die mathematische Beziehung f_{L} =j · B · sin α, wobei α der Winkel zwischen j und B ist.

Im Querschnitt der Fig. 4, der bspw. der Querschnitt eines Rohre oder Tiegels sein kann, sind blockförmige Elektroden 32, 33, 34, 35, 36, 37 so eingelassen, dass sie in ein in einem Rohr 31 befindliches Fluid 38, bspw. eine Glasschmelze, hineinragen, und diese gut kontaktieren. Zwischen den Elektrodenblöcken 32, 33 besteht die Spannung U1, zwischen den Elektrodenblöcken 33, 34 die Spannung U2, zwischen den Elektrodenblöcken 35, 36 besteht die Spannung U4 und zwischen den Elektrodenblöcken 36, 37 die Spannung U3. Dadurch entsteht zwischen den Elektrodenblöcken 32, 33, 34 eine gegen den Uhrzeigersinn gerichtete elektrische Stromdichte j und zwischen den Elektrodenblöcken 35, 36, 37 eine im Uhrzeigersinn gerichtete elektrische Stromdichte j. Der Tiegel bzw. das Rohr 31 mit den eingelassenen Elektroden 32 bis 37 ist von einer elektrischen Spule 39 umgeben, durch die ein Strom I fließt, der um die Spule 39 ein Magnetfeld induziert, das im Fluid 38 eine in die Zeichenebene hinein gerichtete magnetische Flussdichte B erzeugt. Elektrische Stromdichte j und magnetische Flussdichte B generieren eine Lorentzkraftdichte f_{L}, die in der Zeichnung im unteren Teil des Rohrquerschnitts 31 zur Achse X-X hin und im oberen Teil des Rohrquerschnitts 31 von der Achse X-X weg gerichtet ist und auf das Fluid 38 einen entsprechenden Druck ausübt. Wird die Richtung des Stromes I in der Spule 39 umgekehrt, so kehrt sich auch die Lorentzkraftdichte f_{L} um und das Fluid 38 wird gegen den in der Zeichnung unteren Teil des Rohrquerschnitts 31 gedrückt. Wird dieser Wechsel der Stromrichtung I mit geeigneter Frequenz wiederholt und werden auch die Spannungen bzw. Ströme in den Elektroden 32 bis 37 und der Spule 39 geeignet gesteuert (Fig.1), so ergeben sich Variationen der Stromdichte j und Flussdichte B, die sich in gleicher Weise auf die Lorentzkraftdichte f_{L} auswirken und die Bewegung des Fluids 38 im Rohr 31 sowohl insgesamt als auch lokal beeinflussen.

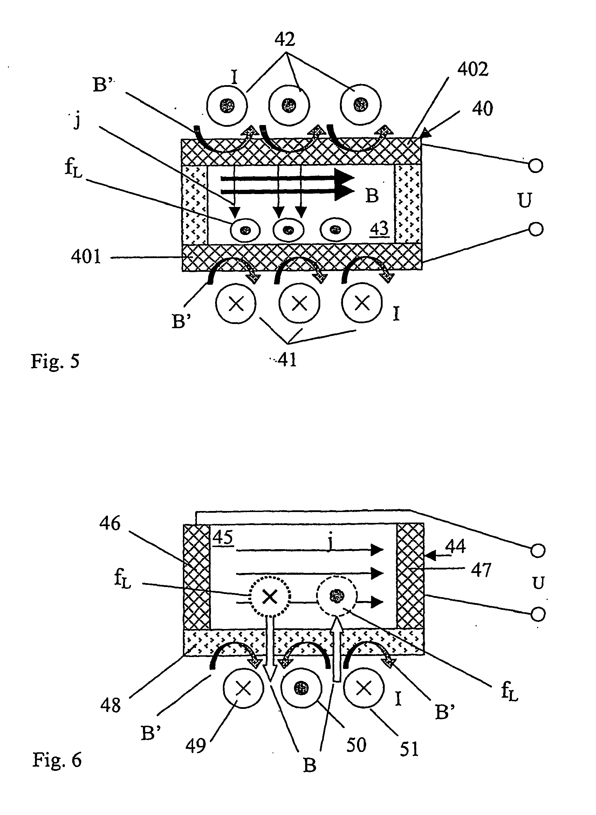

Fig. 5 zeigt einen Querschnitt 40 eines Behälters, bei dem der Boden 401 und die Decke 402 als Elektroden gestaltet sind, die eine elektrische Stromdichte fⱼ bewirken. Außerhalb des Behälters 40 sind den Elektroden benachbart stabförmige elektrische Leiter 41, 42 senkrecht zur Zeichenebene angeordnet. Die Richtung des die Leiter 41 durchfließenden Stroms I zeigt in die Zeichenebene hinein, sie bewirkt eine rechtsdrehende Magnetflussdichte B' für jeden Leiter 41. Die Leiter 42 werden von einem Strom I durchflossen, der aus der Zeichenebene herauszeigt; sie bewirken deshalb eine linksdrehende Magnetflussdichte B'. Aus beiden Magnetflussdichten ergibt sich eine resultierende Magnetflussdichte B, die mit der zu ihr senkrechten Stromdichte j eine Lorentzkraftdichte f_{L} erzeugt, welche aus der Zeichenebene herauszeigt und ein im Behälter 40 befindliches Fluid 43 beeinflusst, bspw. die Bewegung einer Glasschmelze beschleunigt oder bremst.

Die Fig. 6 stellt einen Querschnitt durch einen offenen Glasschmelzebehälter 44 dar, in dem sich eine Schmelze 45 befindet. Zwei gegenüberliegende Seitenwände des Behälters sind als Elektroden 46, 47 gestaltet, an denen eine Spannung U anliegt und zwischen denen ein elektrisches Feld mit der elektrischen Stromdichte j besteht. Unter dem Boden 48 des Behälters 44 befinden sich von einem Strom I durchflossene elektrische Leiter 49, 50, 51 rechtwinklig zur Zeichenebene gerichtet. In den Leitern 49, 51 fließt der Strom I in die Zeichenebene hinein und im Leiter 50 aus der Zeichenebene heraus. Der Stromfluss I induziert um die Leiter 49, 50, 51 Magnetfelder mit magnetischen Flussdichten B', die für die Leiter 49, 51 rechtsdrehend und für den Leiter 50 linksdrehend gerichtet sind. Aus ihnen ergeben sich resultierende Flussdichten B, die im rechten Teil des Behälters 44 aufwärts und im linken Teil des Behälters 44 abwärts gerichtet sind. Im Zusammenwirken der resultierenden Flussdichten B mit den Stromdichten j ergibt sich im rechten Teil des Gefäßes 44 eine aus der Zeichenebene heraus gerichtete Lorentzkraftdichte f_{L} und im linken Teil des Gefäßes 44 eine in die Zeichenebene hinein gerichtete Lorentzkraftdichte f_{L}. Auf diese Weise wirken auf die Glasschmelze 45 im Behälter 44 entgegengesetzte Lorentzkräfte F_{L}, welche die Schmelzeteile unterschiedlich bewegen und eine gute Durchmischung und Homogenisierung der gesamten Glasschmelze 45 gewährleisten.

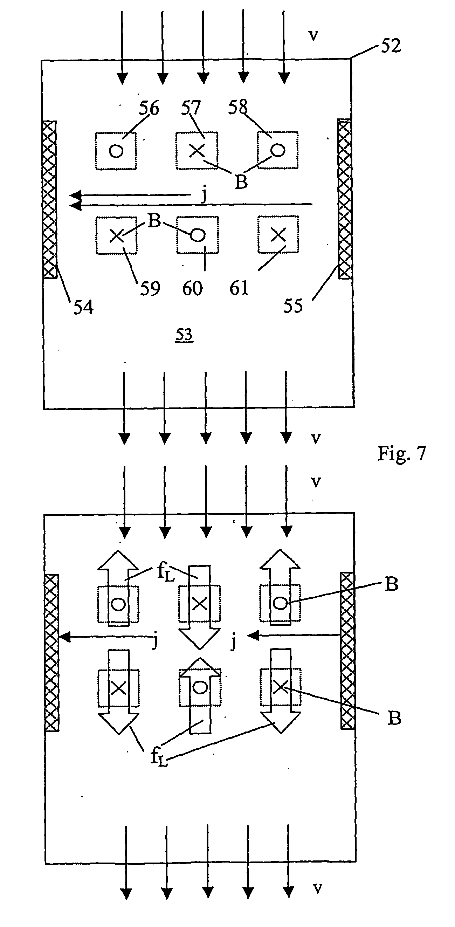

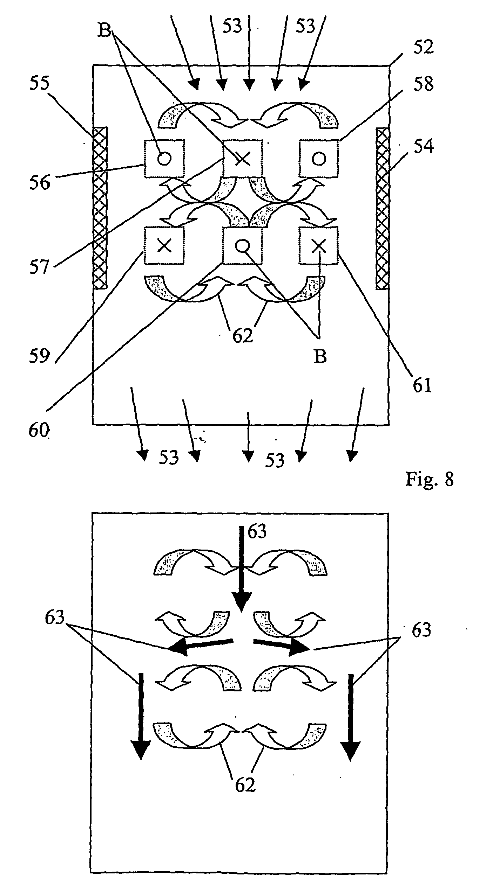

Die Figuren 7 und 8 zeigen einen Ausschnitt eines ausgedehnten Strömungsgebietes oder Strömungskanals 52 mit einem sich mit der Geschwindigkeit v bewegenden Fluid 53, in dem sowohl ein elektrisches als auch ein magnetisches Wechselfeld auf das Fluid wirken. Beide werden bspw. durch eine Steuereinheit gesteuert, wie sie zu Fig. 1 beschrieben ist. Das elektrische Feld mit einer gerichteten elektrischen Stromdichte j wird durch zwei Elektroden 54, 55 erzeugt, die sich im Strömungskanal befinden. Einzelmagnete 56, 57, 58, 59, 60, 61 erzeugen die Magnetfelder mit den magnetischen Flussdichten B, die in Folge der Polung der Magnete 56 bis 61 unterschiedlich gerichtet sind. Und zwar sind die magnetischen Flussdichten B der Magnete 56, 58, 60 aus der Zeichenebene heraus und die magnetischen Flussdichten B der Magnete 57, 59, 61 in die Zeichenebene hinein gerichtet. Demzufolge werden auch an den einzelnen Orten (Magneten) des Strömungskanals 52 unterschiedlich gerichtete Lorentzkraftdichten f_{L} =fⱼ x f_{B} erzeugt, die auch in Abhängigkeit von den Stärken der Magnete 56 bis 61 in ihrer Größe unterschiedlich sein können. Außerdem können ihre Richtungen durch Umpolungen der Magnete oder der Elektroden umgekehrt werden. In Fig. 7 zeigen die den Magneten 56, 58, 60 zugehörigen Lorentzkraftdichten f_{L} entgegen der Geschwindigkeit v und bremsen diese damit ab oder kehren sie um, während die den Magneten 57, 59, 61 zugehörigen Lorentzkraftdichten f_{L} in Richtung der Geschwindigkeit v zeigen und die Hauptströmungsgeschwindigkeit v an diesen Stellen verstärken.
Es ergeben sich weiterhin im Strömungskanal 52 Bereiche, in denen die Lorentzkräfte F_{L} bestrebt sind, das Fluid 53 zu komprimieren, und Bereiche, in denen die Lorentzkräfte F_{L} bestrebt sind, das Fluid 53 zu dekomprimieren. Darüber hinaus kommt es zu intensiven Verwirbelungen im Fluid.
Fig. 8 lässt anhand von Pfeilen 62, 63 deutlich erkennen, in welcher Weise die einzelnen Lorentzkräfte lokale Fluidströmungen bewirken und das gesamte Strömungsregime im Strömungskanal 52 verändern.
Zur besseren Übersichtlichkeit sind die Figuren 7 und 8 jeweils auseinandergezogen dargestellt. Und zwar enthält nur der untere Figurenteil der Fig. 7 die entstehenden Lorentzkraftdichten und nur der untere Figurenteil der Fig. 8 das sich endgültig ausbildende Srömungsregime.

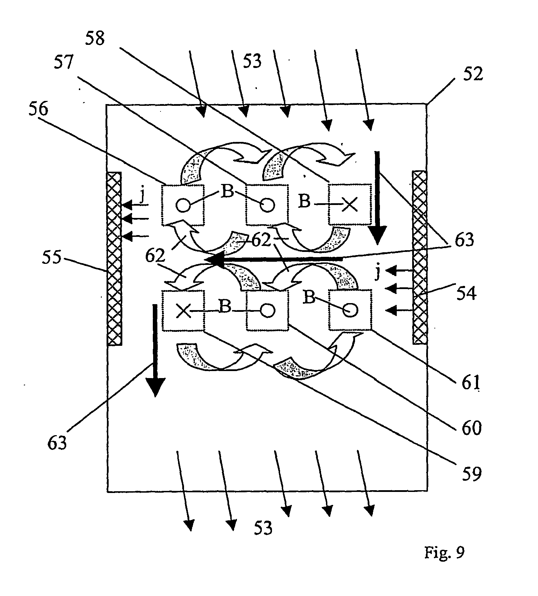

In Fig. 9 ist wieder der Strömungskanal 52 mit dem Fluid 53, den Elektroden 54, 55 zur Erzeugung der Stromdichte j und den Einzelmagneten 56 bis 61 zur Erzeugung der magnetischen Flussdichten B erkennbar. Im Unterschied zu den Fig. 7 und 8 sind die Magnete 56, 57, 60, 61 so gepolt, dass sie eine aus der Zeichenebene rechtwinklig herausgerichtete magnetische Flussdichte B hervorrufen. Die Magnete 58, 59 sind so gepolt, dass sie eine in die Zeichenebene rechtwinklig hineingerichtete magnetische Flussdichte B bewirken. Dadurch kommt es im in Betracht gezogenen Bereich des Strömungskanals zu Änderungen der Lorentzkraftdichten f_{L} und demzufolge zu Strömungssituationen, Drucksituationen und Wirbeln, die durch Pfeile 62 für die einzelnen, den Magneten zugeordneten Lorentzkraftdichten und durch Pfeile 63 für das gesamte Durchströmungsregime markiert sind.

Es versteht sich von selbst, dass in einem Strömungskanal, einer Schmelzwanne oder einem sonstigen Behälter für ein elektrisch leitfähiges, viskoses Fluid auch mehrere der beschriebenen Bereiche für die Einwirkung der Lorentzkraft auf das Fluid vorhanden sein können.

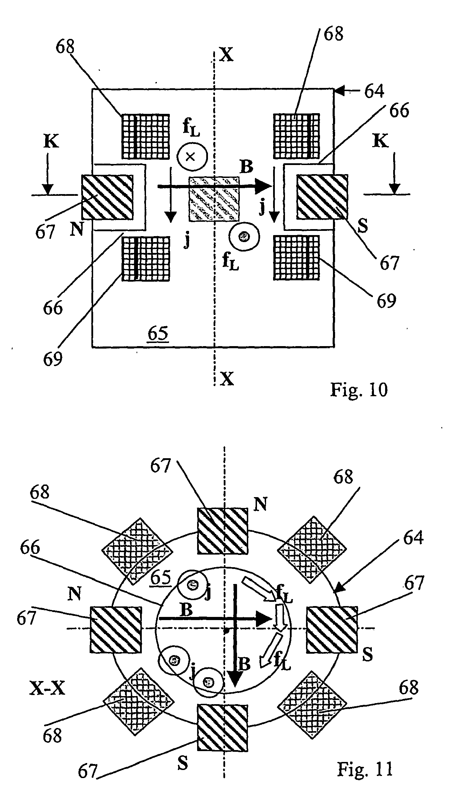

Die Fig. 10 und 11 stellen wieder einen zylindrischen Behälter 64 mit einer Achse X-X (Speiserkanal, Schmelzetransportrohr, Läuterkanal, Homogenisierungsrohr) für ein Fluid 65 dar, der Verengungen oder Einschnürungen 66 für vier regelmäßig über den gesamten Umfang verteilte Magnete 67 aufweist, die durch ihre Pole N, S markiert sind. Die Einschnürungen können auch über den gesamten Umfang des Behälters 64 reichen. In axialer Richtung befinden sich ebenfalls regelmäßig über den gesamten Umfang verteilt und gegenüber dem Magneten 67 versetzt Blockelektroden 68, 69, die in das Fluid 65 hineinragen, während die Magnete 67 vom Fluid 65 isoliert sind. Bei Bestromung besteht zwischen den Elektroden 68 und 69 eine parallel zur Achse X-X gerichtete Stromdichte j, die je nach Bestromung unterschiedlich sein kann. Zwischen den Elektromagneten 67 bildet sich eine in Durchmesserrichtung zeigende magnetische Flussdichte B aus, die ebenfalls von der Stärke der Magnete abhängig ist und unterschiedlich sein kann. Stromdichte j und magnetische Flussdichte B sind steuerbar und variierbar und erzeugen eine peripher gerichtete entsprechende Lorentzkraftdichte f_{L}, die ihre Richtung umkehrt, wenn die Blockelektroden 68, 69 oder die Magnete 67 umgepolt werden. Während eines Prozesses kann die Umpolung nach einem vorgegebenen Regime wiederholt werden und die Beeinflussung des Fluids 67 durch die Lorentzkraft F_{L} entsprechend erfolgen.

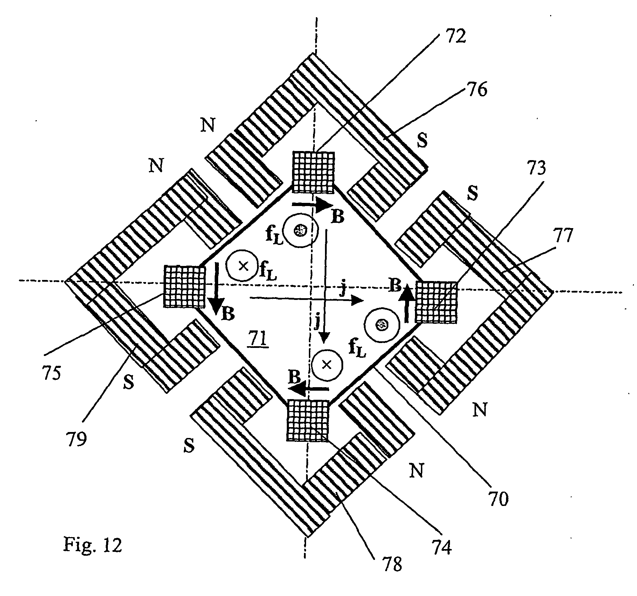

In Fig. 12 ist ein Querschnitt 70 eines kastenförmigen Behälters für ein Fluid 71 dargestellt. In den Ecken des kastenförmigen Behälters 70 sind vier Blockelektroden 72, 73, 74, 75 angeordnet, von denen jeweils zwei gegenüberliegende, nämlich 72, 74 und 73, 75 zusammenwirken. Zwischen ihnen bilden sich elektrische Stromdichten j aus, welche bei unterschiedlichen angelegten Spannungen voneinander verschieden sind. Bspw. können zwei um 90 ° versetzte Scott-Spannungen angelegt werden. Außerdem sind vier C-förmige Elektromagnete 76, 77, 78, 79 vorgesehen, die mit ihren Polen N, S die Ecken des Querschnitts 70 so umgreifen, dass jeweils einem S-Pol des einen Magnets 76, 78 ein S-Pol des benachbarten Magnets 77, 79 und einem N-Pol des einen Magnets 76, 78 ein N-Pol des anderen Magnets 79, 77 benachbart liegt. Demzufolge kreieren die Magnete 76, 77 und 78, 79 magnetische Flussdichten B, welche jeweils im rechten Winkel aufeinander zu gerichtet sind.

In Abhängigkeit von den Stromdichten j und den Flussdichten B und deren Phasenlagen entstehen Lorentzkraftdichten f_{L}, die rechtwinklig zum Querschnitt 70 gerichtet sind. Und zwar zeigen die durch die Elektroden 72, 74 und die Magnete 76, 78 erzeugten Lorentzkraftdichten f_{L} rechtwinklig aus der Zeichnung heraus und die durch die Elektroden 73, 75 und die Magnete 77, 79 erzeugten Lorentzkraftdichten f_{L} rechtwinklig in die Zeichnung hinein. Entsprechend wird das Fluid 71 im Bereich des Querschnitts 70 beeinflusst.
Durch entsprechendes Vertauschen der Polung N, S der einzelnen Magnete kann erreicht werden, dass die Lorentzkraftdichte f_{L} in den einzelnen Bereichen des Strömungsquerschnitts 70 in andere Richtungen zeigt; bspw. bei überall benachbart liegenden N und S zeigt f_{L} ausschließlich in die Zeichenebene hinein oder aus ihr heraus; somit wird eine evtl. vorhandene Hauptströmung abgebremst oder beschleunigt.

In allen Ausführungsbeispielen sind die Frequenzen der an die Elektroden angelegten Spannungen verschieden von denen, welche an die Magnete angelegt sind; demzufolge sind auch die Frequenzen νⱼ der elektrischen Stromdichte j von den Frequenzen ν_{B} der magnetischen Flussdichte B für die Dauer eines Arbeitsprozesses verschieden. Weichen die Frequenzen νⱼ und ν_{B} wenig voneinander ab, so ist die Frequenz der Lorentzkraftdichte f_{L} so gering, dass sich Druck- und Strömungsänderungen eines viskosen Fluids langwellig, d. h. langsam vollziehen. Man kann sagen, dass dies bei einem Frequenzverhältnis νⱼ/ν_{B} bzw. ν_{B}/ νⱼ von 1 bis 10 in etwa der Fall ist. Von deutlichen Frequenzverhältnisunterschieden von νⱼ und ν_{B} kann man sprechen, wenn das Frequenzverhältnis ν_{B} / νⱼ > 20, vorzugsweise bis 360 ist oder das Frequenzverhältnis νⱼ / ν_{B} > 20 ist und sich dadurch Druck- und Strömungsunterschiede in kleinen zeitlichen Abständen, also kurzwellig vollziehen.

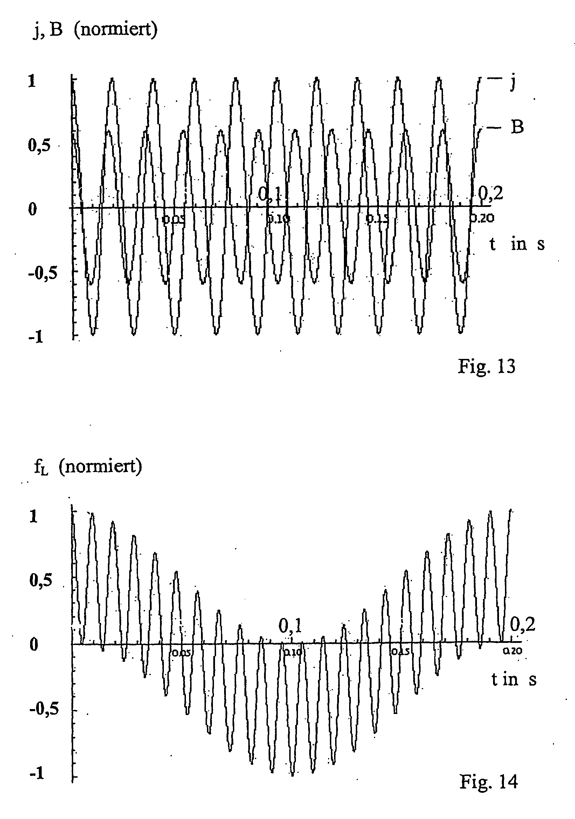

In den Figuren 13 bis 17 ist in Diagrammen das Zusammenwirken der elektrischen Stromdichte j und der magnetischen Flussdichte B in Abhängigkeit von ihrer Phasen und Frequenz ν zur Gewinnung der Lorentzkraftdichte f_{L} erläutert und dargestellt. Dabei ist in jedem Diagramm auf der Abszisse die Zeit t und auf der Ordinate der Figuren 14 bis 17 die Lorentzkraftdichte f_{L} aufgetragen.

Fig. 13 zeigt die grafische Darstellung der elektrische Stromdichte j, die harmonisch als Funktion der Zeit gemäß j(t) = j₀ cos ( 2 π νⱼ t ) mit der Frequenz νⱼ oszilliert. Im gleichen Raumpunkt ist die magnetische Flussdichte B gegeben, die harmonisch als Funktion der Zeit gemäß B(t) = B₀ cos ( 2 π ν_{B} t ) mit der Frequenz ν_{B} oszilliert. Im vorliegenden Beispiel werden die Frequenzen νⱼ= 50 Hz und ν_{B} = 55 Hz verwendet.
Um die beiden Plots der Funktionen j und B gut unterscheiden zu können, wurden für die Amplituden j₀ und B₀ die normierten Werte j₀ = 1 und B₀ = 0,6 festgelegt. Der Darstellungsbereich auf der Abszisse reicht von der Zeit t = 0 s bis zu t = 0,2 s. Man erkennt die sich verändernde Phasenlage zwischen den beiden Funktionsverläufen an der Verschiebung ihrer Maxima zueinander.
Weiterhin ist zu sehen, dass in den Bereichen t = 0 s...0,05 s und t = 0,15 s...2 s die Phasenlage annähernd gleich ist, so dass durch die Multiplikation von j und B gemäß f_{L} = j × B meist positive Lorentzkraftdichten f_{L} generiert werden.
Im Gegensatz dazu werden im Bereich t = 0,05 s...0,15 s meist positive und negative Werte von j und B miteinander multipliziert, so dass die Lorentzkraftdichte f_{L} hier überwiegend negativ ist.

Wegen der Massenträgheit der hier in Frage kommenden Fluide, insbesondere Glasschmelzen, ist nicht zu erwarten, dass bei einer Einwirkungsperiodendauer von 0,2 s irgendwelche makroskopische Bewegungen sichtbar sind. Jedoch können im molekularen Bereich und lokal durchaus Bewegungen und Beeinflussung des Fluids auftreten. Fig. 14 zeigt den zeitlichen Verlauf der durch die Multiplikation der Stromdichte j(t) mit der magnetischen Flussdichte B(t) entstehenden Lorentzkraftdichte f_{L}(t). Die dargestellte Zeitdauer beträgt 0,2 s.
In diesem Diagramm wie auch in den folgenden Diagrammen wurde für j₀ normiert j₀ = 1 und für B₀ normiert B₀ = 1 verwendet, so dass man als Ordinate die normierte Lorentzkraftdichte f_{L}(t) mit den Werten -1 ≤ f_{L ≤} +1 erhält.
Für die verwendeten Frequenzen νⱼ = 50 Hz und ν_{B} = 55 Hz entsteht eine kurzwellige Lorentzkraftdichte f_{L} mit der Frequenz ν_{L} = 105 Hz.
Der Mittelwert der langwelligen Lorentzkraftdichte ν_{L-mittl} (t) ist jedoch nicht konstant sondern schwankt mit der Periodendauer T_{L-mittl} = 0,2 s bzw. mit der Frequenz ν_{L-mittl} = 5 Hz um den Wert Null.
Das bedeutet, dass die mittlere (langwellige) Kraftwirkung mit ν_{L-mittl} = 5 Hz in ihrer Richtung umkehrt und zusätzlich eine höherfrequente Kraftwirkung f_{L} der Frequenz ν_{L} = 105 Hz existiert, die zeitweise zwischen Null und Pluswerten, zwischen Null und Minuswerten und zwischen Plus- und Minuswerten oszilliert.

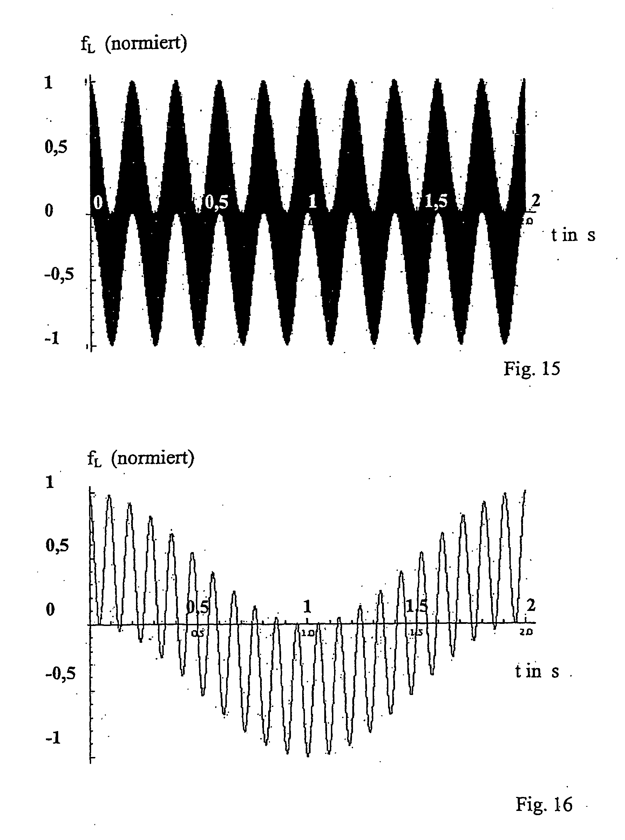

Fig. 15 zeigt den in Fig. 14 beschriebenen zeitlichen Verlauf der mittleren Lorentzkraftdichte f_{L-mittl.}(t) mit der Frequenz ν_{L-mittl} = 5 Hz um den Wert Null. Die dargestellte Zeitdauer beträgt 2 s. Es wird die doppelte Periodizität der Lorentzkraft deutlich. Zum einen ist ν_{L-mittl} = 5 Hz relativ niedrig, zum anderen ist ν_{L} = 105 Hz bereits so groß, dass dieser Verlauf im Plot schon nicht mehr grafisch aufgelöst werden kann und als Bandbreite der mittleren Lorentzkraftdichte f_{L-mittl.}(t) erscheint.
In diesem Fall können neben den Bewegungen und Umwandlungen im molekularen Bereich oder lokal schon ohne Hilfsmittel wahrnehmbare Bewegungen eines relativ trägheitslosen Fluids eintreten.

Fig. 16 zeigt ein anderes Beispiel, bei dem die Frequenz der elektrischen Stromdichte j νⱼ = 5 Hz und die der magnetischen Flussdicht B ν_{B} = 5,5 Hz beträgt. Die dargestellte Zeitdauer beträgt 2 s.
Die Frequenz der kurzwelligen Lorentzkraftdichte f_{L} ist ν_{L} = 10,5 Hz, die mittlere (langwellige) Lorentzkraftdichte hat die Periodendauer T_{L-mittl} = 2 s und ihre Frequenz beträgt ν_{L-mittl} = 0,5 Hz.
In diesem Fall können neben den Bewegungen und Umwandlungen im molekularen Bereich oder lokal schon ohne Hilfsmittel wahrnehmbare Bewegungen einer Flüssigkeit eintreten.

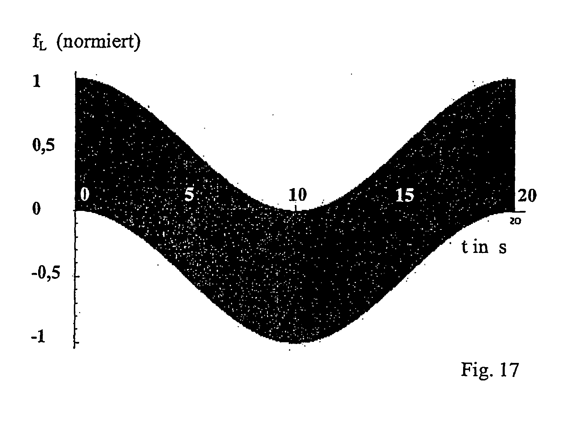

Die Figur 17 zeigt ein Beispiel, dass mit einem Fluid leicht experimentell nachzubilden ist und bei dem wegen der geringen Frequenz ν_{L-mittl} der generierten mittleren Lorentzkraft z.B. eine Flüssigkeit sich sichtbar mit der oszillierenden Kraft mitbewegen kann.

Die Frequenz der elektrischen Stromdichte j beträgt hier νⱼ = 50 Hz und die der magnetischen Flussdichte B ν_{B} = 50,05 Hz. Die dargestellte Zeitdauer erstreckt sich über 20 s.

Die Frequenz der kurzwelligen Lorentzkraft f_{L} ist ν_{L} = 100,05 Hz. Sie wird im Plot nicht aufgelöst und erscheint als breiter Balken. Die mittlere (langwellige) Lorentzkraftdichte f_{L-mittl} hat die Periodendauer T_{L-mittl} = 20 s und ihre Frequenz beträgt ν_{L-mittl} = 0,05 Hz. Bei dieser Periodendauer der Lorentzkraftdichte f_{L-mittl} treten vorrangig deutliche Fluidbewegungen und Änderungen der Fluidbewegung auf.

Die Erfindung ist nicht an die dargestellten Ausführungsbeispiele gebunden. Sie ist im Hinblick auf die angepasste Gestaltung der Behälter, die Anordnung und Verschaltung der Elektroden und die Anordnung, Art und die Gestaltung der Magnete vielfältig variierbar und an entsprechende Anwendungsfälle anpassbar.
Bspw. können die C-, U- oder V-förmig gestalteten Magnete zur Erzeugung einer erforderlichen Flussdichte B im Behälter auch in Längsrichtung des Behälters angeordnet sein und eine Erweiterung des Behälters umfassen. In diesem Sinne können alle in den Zeichnungen dargestellten Merkmale sowohl einzeln als auch in beliebiger Kombination miteinander erfindungswesentlich sein.

### Bezugszeichenliste

| | |
|---|---|
| 20 | Frequenzgenerator |
| 21 | Eingabeeinheit |
| 22 | Wandler-Verstärker-Einheit |
| 23, 32, 33, 34, 35, 36, 37, 46, 47, 54, 55 | Elektroden |
| 24, 28, 41, 42, 49, 50, 51 | staubförmige Stromleiter |
| 25,40 | Fluidbehälter |
| 26 | Netzteil |
| 27, 31 | Rohr |
| 29 | Ringelektroden |
| 30, 38, 43, 53, 65, 71 | Fluid, Fluidstrom |
| 39 | Spule |
| 44 | Glasschmelzbehälter |
| 45 | Glasschmelze |
| 48, 401 | Boden |
| 52 | Strömungskanal |
| 56, 57, 58, 59, 60, 61, 67 | Einzelmagnete |
| 62, 63 | Pfeile |
| 64 | Behälter |
| 66 | Einschnürungen |
| 68, 69, 72, 73, 74, 75 | Blockelektroden |
| 70 | Querschnitt |
| 76, 77, 78, 79 | Elektromagnete |
| 402 | Decke |
| B, B' | magnetische Flussdichte |
| j | elektrische Stromdichte |
| f_{L} | Lorentzkraftdichte |
| N, S | Pole |
| U, U1, U2 ,U3 ,U4, Uⱼ, U_{B} | Spannungen |
| Iⱼ, I_{B} | Ströme |
| v | Geschwindigkeit |
| X-X | (geometrische) Achse |

## Patentansprüche

1. Verfahren zur Erzeugung von Strömungen, Druckschwankungen und mechanischen Schwingungen innerhalb von Glasschmelzen mit Hilfe einer zur Strömungsbeeinflussung ausreichend großen Lorentzkraft in einem Arbeitsprozess, insbesondere zur Mischung, Homogenisierung, Läuterung und Beschleunigung chemischer Reaktionen und physikalischer Prozesse in Glasschmelzen, mit Hilfe eines elektrischen Wechselfeldes und eines magnetischen Wechselfeldes, **dadurch gekennzeichnet, dass** während der gesamten Dauer des Prozesses der Strömungs-, Druck- und Schwingungserzeugung die Stromdichtefrequenz νⱼ und die Frequenz der magnetischen Flussdichte ν_{B} voneinander verschieden gehalten werden und die Lorentzkraftdichte entsprechend variiert.

2. Verfahren gemäß Anspruch 1, **dadurch gekennzeichnet, dass** die Stromdichtefrequenz νⱼ und die Frequenz der magnetischen Flussdichte ν_{B} voneinander verschieden, aber konstant gehalten werden.

3. Verfahren gemäß Anspruch 1, **dadurch gekennzeichnet, dass** die Stromdichtefrequenz νⱼ und/oder die Frequenz der magnetischen Flussdichte ν_{B} während des Prozesses verschieden gehalten, aber zeitlich variiert werden.

4. Verfahren gemäß Anspruch 1, **dadurch gekennzeichnet, dass** die Stromdichtefrequenz νⱼ kleiner als die Frequenz der magnetischen Flussdichte ν_{B} ist und ν_{B} < 19 kHz ist.

5. Verfahren gemäß Anspruch 1, **dadurch gekennzeichnet, dass** die Stromdichtefrequenz νⱼ größer als die Frequenz der magnetischen Flussdichte ν_{B} ist und ν_{B} > 0 gilt.

6. Verfahren gemäß Anspruch 1, **dadurch gekennzeichnet, dass** zur Erzeugung insbesondere relativ langwelliger zeitlich variierender Druck- und Strömungsverhältnisse die Frequenzdifferenz vⱼ - ν_{B} oder ν_{B} - νⱼ kleiner als 1 Hz, vorzugsweise kleiner als 0,1 Hz ist.

7. Verfahren gemäß Anspruch 1, **dadurch gekennzeichnet, dass** zur Erzeugung relativ kurzwelliger Druckänderungen und Schwingungen die Frequenzsumme ν_{B} + νⱼ oder diese Frequenzsumme und die Frequenzdifferenz | ν_{B} - νⱼ | größer als 1 Hz, vorzugsweise größer als 10 Hz sind und somit die Lorentzkraftdichte f_{L} derart variiert, dass sie in einem Fluid unterschiedliche physikalische und/oder chemische Wirkungen hervorbringt.

8. Verfahren gemäß Anspruch 1, **dadurch gekennzeichnet, dass** in einem Fluid mehrere Bereiche vorgesehen sind, in denen die Lorentzkraftdichte f_{L} unterschiedlich wirkt.

9. Vorrichtung zur Durchführung eines Verfahrens gemäß einem oder mehrerer der Ansprüche 1 bis 8 umfassend
einen Behälter, in welchem das Fluid aufnehmbar ist, wobei an oder in dem Behälter zur Erzeugung der Stromdichte j Elektroden so angebracht sind, dass sie das aufgenommene Fluid kontaktieren, und außerhalb des Behälters im Bereich der Elektroden zur Erzeugung der Flussdichte B mindestens ein Magnet angeordnet ist, wobei die Elektroden und Magnete so angeordnet sind, dass die elektrische Stromdichte und die magnetische Flussdichte im Betriebszustand der mit Fluid befüllten Vorrichtung rechtwinklig zueinander stehen und der Behälter Verengungen, Erweiterungen oder Kanten aufweist, in oder an denen die Magnete zur Erzeugung der magnetischen Flussdichte angeordnet sind,
oder umfassend
einen Behälter, in welchem das Fluid aufnehmbar ist, wobei die das Fluid beheizenden Elektroden zur Erzeugung der Stromdichte j mit dem Behälter in Verbindung stehen, und im Bereich der Stromdichte j zur Erzeugung der Flussdichte B mindestens ein Magnet angeordnet ist, wobei die Elektroden und Magnete so angeordnet sind, dass die elektrische Stromdichte und die magnetische Flussdichte im Betriebszustand der mit Fluid befüllten Vorrichtung rechtwinklig zueinander stehen und die Magnete als stab-, rohr- oder kanalförmige elektrische Leiter ausgebildet sowie in paralleler Richtung zu einer Längsausdehnung des Behälters angeordnet sind,
wobei die Elektroden und der mindestens eine Magnet mit einer Steuereinheit verbunden sind, mit welcher die Elektroden und der mindestens eine Magnet so ansteuerbar sind, dass sich eine Stromdichte ausbildet, deren Frequenz νⱼ von der Frequenz ν_{B} der magnetischen Flussdichte B verschieden ist und die getrennt oder gemeinsam variierbar sind und Stromdichte und magnetische Flussdichte senkrecht zueinander stehen.

10. Vorrichtung gemäß Anspruch 9, **dadurch gekennzeichnet, dass** der Behälter ein eng begrenztes Strömungsgebiet in Art eines Kanals, Rohres, Tiegels ist, worin die Lorentzkraft insgesamt wirkt.

11. Vorrichtung gemäß Anspruch 9, **dadurch gekennzeichnet, dass** der Behälter ein ausgedehntes Strömungsgebiet in Art eines Tanks, einer Wanne, eines breiten Kanals ist, worin die Elektroden und Magnete in mindestens einem Teilbereich angeordnet sind und die Lorentzkraft nur in diesem Bereich wirkt.

12. Vorrichtung gemäß Anspruch 9, **dadurch gekennzeichnet, dass** die Elektroden als Kreisringe oder Kreisringausschnitte ausgeführt sind und den Behälter peripher, z.B. ringförmig umfassen und mindestens zwei voneinander im geeigneten Abstand so angeordnet sind, dass sich das Fluid durch die ringförmigen Öffnungen bewegen kann.

13. Vorrichtung gemäß Anspruch 9, **dadurch gekennzeichnet, dass** die Elektroden als Blöcke, Platten, Zylinder, Pyramiden oder Formstücke gestaltet und gegen- bzw. untereinander elektrisch verschaltet sind.

14. Vorrichtung gemäß den Ansprüchen 10 bis 13, **dadurch gekennzeichnet, dass** die Elektroden durch die freie Fluidoberfläche oder durch das Behälterberandungsmaterial in das Fluid eintauchen, wobei die Elektroden bündig mit dem Behälterberandungsmaterial abschließen oder Teil des Behälterberandungsmaterials sind.

15. Vorrichtung gemäß Anspruch 10, **dadurch gekennzeichnet, dass** der mindestens eine Magnet mindestens eine den Behälter umgebende Spulenwicklung ist.

16. Vorrichtung gemäß den Ansprüchen 10 und 11, **dadurch gekennzeichnet, dass** der mindestens eine Magnet C- oder U-förmig ausgebildet ist und zumindest einen Teil des Behälters umgibt.

17. Vorrichtung gemäß den Ansprüchen 10, 11, 15 oder 16, **dadurch gekennzeichnet, dass** die Behälterwandung Einbuchtungen oder Aufweitungen aufweist, in die der mindestens eine Magnet hineinragt.

18. Vorrichtung gemäß den Ansprüchen 10, 11, 16 oder 17, **dadurch gekennzeichnet, dass** die Pole der Magneten einander gegenüberstehen.

19. Vorrichtung gemäß den Ansprüchen 10 bis 18, **dadurch gekennzeichnet, dass** der Behälter eine Längsausdehnung hat und die Elektrodenanordnung und der mindestens eine Magnet in Richtung der Längsausdehnung mehrfach angeordnet sind.

20. Vorrichtung gemäß Anspruch 19, **dadurch gekennzeichnet, dass** der mindestens eine Magnet ein Joch aus die magnetische Flussdichte verstärkendem Material hat.

21. Vorrichtung gemäß dem Anspruch 9, **dadurch gekennzeichnet, dass** die Magnete durch stabförmige Stromleiter realisiert werden.

## Claims

1. Method for producing streams, pressure variations and mechanical vibrations in glass melts in one operating procedure by means of Lorentz force that is sufficiently high to influence streams, particularly for the mixture, homogenization, purification and acceleration of chemical reactions and physical processes in glass melts by means of an electrical alternating field and a magnetic alternating field, **wherein** the current density frequency νⱼ and the frequency of the magnetic flux density ν_{B} are kept at values that are different from each other during the complete process and the Lorentz force density varies correspondingly.

2. Method according to claim 1, **wherein** the current density frequency νⱼ and the frequency of the magnetic flux density ν_{B} are kept at constant values but are different from each other.

3. Method according to claim 1, **wherein** the current density frequency νⱼ and/or the frequency of the magnetic flux density ν_{B} are kept at values different from each other but are varied during the time of the process.

4. Method according to claim 1, **wherein** the current density frequency νⱼ is lower than the frequency of the magnetic flux density ν_{B} and ν_{B} < 19 kHz.

5. Method according to claim 1, **wherein** the current density frequency νⱼ is higher than the frequency of the magnetic flux density ν_{B} and ν_{B} > 0.

6. Method according to claim 1, **wherein** the frequency difference νⱼ - ν_{B} or ν_{B} - νⱼ is lower than 1 Hz, preferably lower than 0.1 Hz, to produce, in particular, relatively long-wave pressure and stream relations that vary over the time.

7. Method according to claim 1, **wherein** the frequency sum ν_{B} + νⱼ is or this frequency sum and the frequency differences | ν_{B} - νⱼ | are higher than 1 Hz, preferably higher than 10 Hz, to produce relatively short-wave pressure variations and vibrations, and thus the Lorentz force density f_{L} varies so that it causes different physical and/or chemical effects in a fluid.

8. Method according to claim 1, **wherein** several areas are provided in a fluid in which the Lorentz force f_{L} has different effects.

9. Device for applying a method according to one or several of the claims 1 through 8 comprising
a vessel in which the fluid can be introduced, and at or in said vessel electrodes are arranged for producing the current density j in such a manner that they contact the introduced fluid, and at least one magnet is provided outside the vessel in the area of the electrodes for producing the flux density B, the electrodes and magnets are positioned so that the electric current density and the magnetic flux density are at a right angle to each other in the operating mode of the fluid-filled device and the vessel has recesses, expansions or edges in or at which the magnets are arranged for producing the magnetic flux density,
or comprising
a vessel in which the fluid can be introduced and the electrodes heating the fluid for producing the current density j are connected to this vessel, and in the area of the current density j at least one magnet is arranged for producing the flux density B, and said electrodes and magnets are arranged such that the electric current density and the magnetic flux density are at a right angle to each other in the operating mode of the fluid-filled device, and the magnets are rod-, tube- or channel-shaped electric conductors aligned in parallel to a longitudinal extension of the vessel,
wherein the electrodes and the at least one magnet are connected to a control unit that can trigger the electrodes and the at least one magnet so that a current density is produced the frequency νⱼ of which is different from the frequency v_{B} of the magnetic flux density B and the two frequencies can be separately or commonly varied, and the current density and the magnetic flux density are positioned perpendicular to each other.

10. Device according to claim 9, **wherein** the vessel is a very restricted flux area in form of a channel, rod or jar and the Lorentz acts everywhere in this area.

11. Device according to claim 9, **wherein** the vessel is an extended flux area in form of a tank, a tub or a broad channel where the electrodes and magnets are arranged at least in one subarea and the Lorentz force acts only in this area.

12. Device according to claim 9, **wherein** the electrodes are provided as circular rings or circular ring segments and peripherally surround the vessel, e.g. in form of a ring, and at least two electrodes are arranged at a suitable distance from each other so that the fluid can move through the ring-shaped openings.

13. Device according to claim 9, **wherein** the electrodes are designed as blocks, plates, cylinders, pyramids or shaped pieces and are electrically interconnected.

14. Device according to claims 10 through 13, **wherein** the electrodes emerge into the fluid via the free fluid surface or via the vessel boundary material, and the electrodes end flush with the vessel boundary material or are a part of the vessel boundary material.

15. Device according to claim 10, **wherein** the at least one magnet is at least one coil winding surrounding the vessel.

16. Device according to claims 10 and 11, **wherein** the at least one magnet has a C- or U-shaped form and surrounds at least one part of the vessel.

17. Device according to claims 10, 11, 15 or 16, **wherein** the vessel wall is provided with recesses or expansions into which the at least one magnet extends.

18. Device according to claim 10, 11, 16 or 17, **wherein** the poles of the magnets are positioned opposite to each other.

19. Device according to claims 10 through 18, **wherein** the vessel has a longitudinal extension and the electrode system and the at least one magnet are repeatedly arranged in the direction of the longitudinal extension.

20. Device according to claim 19, **wherein** the at least one magnet has a yoke made of a material that increases the magnetic flux density.

21. Device according to claim 9, **wherein** the magnets are designed as rod-shaped electric conductors.

## Revendications

1. Procédé pour la production des variations d'écoulement et de pression et de vibrations mécaniques dans des bains de verre au cours d'un seul processus de travail au moyen de la force Lorentz qui est suffisant pour influencer l'écoulement, en particulier pour mélanger, homogénéiser, clarifier et accélérer des réactions chimiques et processus physiques dans des bains de verre, au moyen d'un champ alternant électrique ou magnétique, **est caractérisé en ce que** la fréquence de densité du courant νⱼ et la fréquence de l'induction magnétique ν_{B} sont maintenues aux valeurs différentes pendant toute la durée de la production d'écoulement, de pression et des variations et la densité de la force Lorentz f_{L} varie en conséquence.

2. Procédé suivant la revendication 1 **est caractérisé en ce que** la fréquence de densité de courant νⱼ et la fréquence de l'induction magnétique ν_{B} sont maintenues aux valeurs différentes, mais constantes.

3. Procédé suivant la revendication 1 **est caractérisé en ce que** la fréquence de densité de courant νⱼ et/ou la fréquence de l'induction magnétique ν_{B} sont maintenues aux valeurs différentes, mais sont variées dans le temps du processus.

4. Procédé suivant la revendication 1 **est caractérisé en ce que** la fréquence de densité de courant νⱼ est inférieure à la fréquence de l'induction magnétique ν_{B} et que ν_{B} < 19 kHz.

5. Procédé suivant la revendication 1 **est caractérisé en ce que** la fréquence de densité de courant νⱼ est supérieure à la fréquence de l'induction magnétique ν_{B} et que ν_{B} > 0.

6. Procédé suivant la revendication 1 **est caractérisé en ce que** la différence des fréquences νⱼ - ν_{B} ou ν_{B} - νⱼ pour la production des conditions de pression et d'écoulement, en particulier des conditions de relativement grande longueur d'onde, qui varient dans le temps est inférieure à 1 Hz, de préférence inférieure à 0,1 Hz.

7. Procédé suivant la revendication 1 **est caractérisé en ce que** la somme des fréquences ν_{B} + νⱼ ou cette somme des fréquences et la différence des fréquences | ν_{B} - νⱼ | pour la production des modifications de pression et des variations de relativement courte longueur d'onde est supérieure à 1 Hz, de préférence supérieure à 10 Hz et, de cette façon, la densité de la force Lorentz f_{L} varie tellement qu'elle cause des effets physiques et/ou chimiques différents dans un fluide.

8. Procédé suivant la revendication 1 **est caractérisé en ce que** plusieurs zones avec des effets différents de la densité de la force Lorentz f_{L} sont prévues dans un fluide.

9. Dispositif pour la réalisation d'un procédé suivant une ou plusieurs des revendications 1 à 8 contenant
un récipient dans lequel le fluide peut être introduit, et des électrodes sont fixées sur ou dans ce récipient pour produire la densité de courant j de sorte qu'elles soient en contact avec le fluide introduit, et au moins un aimant est prévu à l'extérieur du récipient dans la zone des électrodes pour produire la densité de flux B, et les électrodes et les aimants sont positionnés de sorte que la densité de courant électrique et l'induction magnétique soient à angle droit pendant le mode opératoire du dispositif rempli du fluide et que le récipient soit muni des contractions, extensions ou rebords dans ou sur lesquels les aimants puissent être arrangés pour produire l'induction magnétique,
ou contenant
un récipient dans lequel le fluide peut être introduit, et les électrodes chauffant le fluide pour produire la densité de courant j sont connectées avec le récipient, et au moins un aimant est arrangé dans la zone de la densité de courant j pour produire la densité de flux B, et les électrodes et les aimants sont positionnés de sorte que la densité de courant électrique et l'induction magnétique soient à angle droit pendant le mode opératoire du dispositif rempli du fluide et les aimants soient des conducteurs électriques en forme de barre, tube ou canal est soient arrangés en parallèle à un allongement longitudinal du récipient,
et les électrodes et le seul aimant (au moins) étant connectés avec une unité de commande, à l'aide de laquelle les électrodes et le seul aimant (au moins) peut être commandé de sorte qu'une densité de courant se forme dont la fréquence νⱼ se diffère de la fréquence ν_{B} de l'induction magnétique B et qui puissent être varier séparément ou en commun et que la densité de courant j et l'induction magnétique soient perpendiculaires l'une à l'autre.

10. Dispositif suivant la revendication 9 **est caractérisé en ce que** le récipient est une zone d'écoulement très restreinte en forme d'un canal, tube ou creuset et la force Lorentz est efficace dans toute la zone.

11. Dispositif suivant la revendication 9 **est caractérisé en ce que** le récipient est une zone d'écoulement étendue en forme d'un réservoir, d'une cuve ou d'un canal large dans laquelle les électrodes et les aimants ne sont positionnés que dans une zone partielle, et la force Lorentz est seulement efficace dans cette zone.

12. Dispositif suivant la revendication 9 **est caractérisé en ce que** les électrodes sont prévues comme anneaux de cercle ou segments d'un anneau de cercle et entourent le récipient de façon périphérique, p.ex. en forme d'anneau, et au moins deux électrodes sont positionnées à une distance appropriée entre elles que le mouvement du fluide par les ouvertures en forme d'anneau est possible.

13. Dispositif suivant la revendication 9 **est caractérisé en ce que** les électrodes sont formées comme bloques, plaques, cylindres ou objets formés et sont connectées électriquement.

14. Dispositif suivant les revendications 10 à 13 **est caractérisé en ce que** les électrodes s'enfoncent dans la fluide par la surface libre du fluide ou par le matériau de bord du récipient et les électrodes sont à fleur avec le matériau de bord ou sont une partie du le matériau de bord.

15. Dispositif suivant la revendication 10 **est caractérisé en ce que** le seul aimant (au moins) est une bobine enroulée entourant le récipient.

16. Dispositif suivant les revendications 10 et 11 **est caractérisé en ce que** le seul aimant (au moins) est en forme de C ou d'U et entoure le récipient au moins en partie.

17. Dispositif suivant les revendications 10, 11, 15 et 16 **est caractérisé en ce que** la paroi du récipient est prévu des contractions ou extensions dans lesquelles le seul aimant (au moins) est introduit.

18. Dispositif suivant les revendications 10, 11, 15 et 16 **est caractérisé en ce que** les pôles des aimants sont en face l'un à l'autre.

19. Dispositif suivant les revendications 10 à 18 **est caractérisé en ce que** le récipient dispose d'un allongement longitudinal et que les électrodes et le seul aimant (au moins) sont arrangés plusieurs fois en direction de l'allongement longitudinal.

20. Dispositif suivant la revendication 19 **est caractérisé en ce que** la culasse du seul aimant (au moins) se compose d'un matériau augmentant l'induction magnétique.

21. Dispositif suivant la revendication 9 **est caractérisé en ce que** les aimants sont réalisés par des conducteurs en forme de barre.
